# EUROPÄISCHE PATENTSCHRIFT

(11) **EP 0 974 394 B1**
(45) Veröffentlichungstag und Bekanntmachung des Hinweises auf die Patenterteilung: **25.01.2006**
(21) Anmeldenummer: 99114453.6
(22) Anmeldetag: 23.07.1999
(51) Int. Cl.: B01J 13/18, B01J 13/20

(54) **Formaldehydarme Dispersion von Mikrokapseln aus Melamin-Formaldehyd-Harzen**
Dispersion of microcapsules with low formaldehyde content from melamine-formaldehyde resins
Dispersion de microcapsules pauvre en formaldéhyde à partir de résines mélamine-formaldehyde

(30) Priorität: 24.07.1998 DE 19833347
(43) Veröffentlichungstag der Anmeldung: 26.01.2000
(73) Patentinhaber: BASF Aktiengesellschaft, 67056 Ludwigshafen (DE)
(72) Erfinder: Frank, Gabriele, 68229 Mannheim (DE); Biastoch, Ralf, Dr., 67346 Speyer (DE)

(56) Entgegenhaltungen:
- DD-A- 274 361
- US-A- 4 406 816
- US-A- 4 670 344
- US-A- 4 957 666
- US-A- 4 963 461

## Beschreibung

Die vorliegende Erfindung betrifft ein Verfahren zur Herstellung von Mikrokapseln durch Kondensation von Melamin-Formaldehyd-Harzen und/oder deren Methylethern in Wasser, in dem das im wesentlichen wasserunlösliche, den Kapselkern bildende Material dispergiert ist, in Gegenwart eines anionischen Schutzkolloids bei pH-Werten von 3 bis 6,5, durch Bildung der Mikrokapseln bei Temperaturen von 20 bis 50°C und anschließender Härtung der Kapselwand bei >50 bis 100°C.

Die EP-A-0-383 358 und die DE-A-3 814 250 lehren lichtempfindliche Materialien bestehend aus Mikrokapseln, deren Wände aus Melamin-Formaldehyd-Harzen gebildet werden. Um den überschüssigen Formaldehyd zu entfernen, wird im Verlauf der Härtung, die bei pH 5,5 und 60°C bereits stattfindet, Harnstoff zugesetzt.

Ebenso wird bei den in der EP-A-319 337 und US-A-4 918 317 beschriebenen Verfahren Harnstoff erst gegen Ende der Härtung zugesetzt.

Mikrokapseln aus Melamin-Formaldehyd-Harzen, die sich durch ihre gleichmäßige Kapselgröße und Dichtigkeit auszeichnen, sind aus der EP-A-0 026 914 und EP-A-0 218 887 bekannt. Die nach diesem Verfahren erhaltenen Kapseldispersionen enthalten noch restlichen freien Formaldehyd, dessen Anwesenheit bei der Weiterverarbeitung unerwünscht ist. Die EP-A-0 026 914 empfiehlt daher, den Formaldehyd im Anschluß an die Härtung mit Ethylenharnstoff und/oder Melamin als Formaldehydfänger zu binden. Dies ermöglicht den Formaldehydgehalt der Dispersion zu senken, hat jedoch keinen Einfluß auf den während der Weiterverarbeitung freiwerdenden Formaldehyd sowie den Formaldehydgehalt der beschichteten Papiere. Ferner ist zu beachten, daß der Zusatz des Ethylenharnstoffs als Formaldehydfänger keinen Einfluß auf die Schale der bereits entstandenen Mikrokapseln hat.

Daher war es Aufgabe der vorliegenden Erfindung, ein Verfahren zur Herstellung von formaldehydarmen Mikrokapseldispersionen zur Verfügung zu stellen, das die oben geschilderten Nachteile vermeidet. Insbesondere sollten die neuen Mikrokapseldispersionen sowohl bei ihrer Herstellung und ihrer Weiterverarbeitung als auch die Aufzeichnungssysteme deutlich weniger Formaldehyd emittieren und dennoch gute anwendungstechnische Eigenschaften aufweisen. Derartige Anforderungen sind beispielsweise Undurchlässigkeit der Kapselwand und enge Größenverteilung der Kapseln.

Demgemäß wurde ein Verfahren zur Herstellung von Mikrokapseln durch Kondensation von Melamin-Formaldehyd-Harzen und/oder deren Methylethern in Wasser, in dem das im wesentlichen wasserunlösliche, den Kapselkern bildende Material dispergiert ist, in Gegenwart eines anionischen Schutzkolloids bei pH-Werten von 3 bis 6,5 durch Bildung der Mikrokapseln bei Temperaturen von 20 bis 50 und anschließend Härtung der Kapselwand bei >50 - 100°C, gefunden, in dem man vor der Härtung 10 - 200 Gew.-% Harnstoff, dessen Aminogruppen gegebenenfalls mit einer Ethylen- oder Propylenbrücke verbunden sind, bezogen auf das Melamin-Formaldehyd-Harz zusetzt. Die Gew.-%angabe bezieht sich auf den Harzanteil und nicht auf seine wäßrige Lösung, in der es in der Regel eingesetzt wird.

Das Verfahren gemäß der Erfindung wird im allgemeinen so durchgeführt, daß man das einzukapselnde Kernmaterial in einer wäßrigen Lösung des anionischen Schutzkolloids, die einen pH von 3 bis 6,5 aufweist, zu feinen Tröpfchen emulgiert, wobei die Tropfengröße, je nach dem vorgesehenen Anwendungszweck, eingestellt werden kann. Zu der vorgelegten Emulsion wird bei Temperaturen zwischen 20 und 45°C unter Durchmischen die wäßrige Lösung des Melamin-Formaldehyd-Harz und/oder dessen Methylethern kontinuierlich oder in Portionen zugegeben.

In diesem ersten Schnitt bilden sich die Mikrokapseln aus. Ihre Hülle wird anschließend durch Erhöhung der Temperatur ausgehärtet. Die Aushärtung der Kapselwand ist bereits oberhalb von 50°C zu beobachten, so daß >50°C, bevorzugt 55°C und insbesondere 65°C als untere Grenze des Temperaturbereichs gewählt werden. Da es sich um eine wäßrige Dispersion handelt, soll die Härtung bis 100°C, bevorzugt 80°C als oberer Temperaturgrenze durchgeführt werden. Je nach pH-Wert der Dispersion erfolgt die Härtung unterschiedlich rasch, wobei Dispersionen bei niedrigeren pH-Werten zwischen 3 und 5 optimal im Temperaturbereich von 65 bis 85 aushärten. Oberhalb von 50°C ist jedoch auch im nur schwach sauren bis neutralen pH-Bereich die Härtung deutlich zu beobachten.

Die optimalen Temperaturen, abhängig vom pH-Wert für die beiden Schritte Kapselbildung und Härtung, können durch einfache Reihenversuche leicht ermittelt werden.

Wesentlich ist, daß der Harnstoff und/oder seine cyclischen Derivate vor dem Härtungsschnitt zugegeben werden. Dies kann bereits bei Herstellung der Emulsion des Kernmaterials sein oder vor oder nach der Bildung der Mikrokapseldispersion. Vorteilhaft dosiert man die Harnstofflösungen zusammen mit der wäßrigen Lösung des anionischen Schutzkolloids oder bevorzugt mit der Lösung des Melamin-Formaldehyd-Harzes zu.

Neben Harnstoff, der bevorzugt gewählt wird, kann man Ethylenharnstoff (2-Imidazolidinon) oder Propylenharnstoff (Tetrahydro-2-pyrimidon) einsetzen.

Bevorzugt setzt man vor der Härtung 50 bis 150 Gew.-% Harnstoff, Ethylen-und/oder Propylenharnstoff bezogen auf die Melamin-Formaldehyd-Harzmenge, zu.

Als Ausgangsstoff für das Wandmaterial eignen sich Melamin-Formaldehyd-Harze und/oder deren Methylether, mit einem Verhältnis von Melamin : Formaldehyd von 1 : 1,5 bis 1 : 6, vorzugsweise 1 : 3 bis 1 : 6. Diese Harze sind N-Methylolmelaminverbindungen oder deren Methylether. Die für das erfindungsgemäße Verfahren verwendeten Harze müssen mit Wasser in jedem Verhältnis mischbar sein, ohne eine Trübung zu erzeugen. Aus diesen Gründen sind die Ether der Methylolmelamine besonders bevorzugt. Die Herstellung der Ausgangsstoffe ist bekannt. Die Auskondensation der Harze erfolgt bei pH-Werten von 3,0 bis 6,5, vorzugsweise von 3,5 bis 5,5. Der pH-Wert in der wäßrigen Phase kann mit Säuren, vorzugsweise mit Ameisensäure eingestellt werden. Die Art der Ausfällung des Melamin-Formaldehyd-Harzes ist etwas vom Harz abhängig, so daß es für die Bildung der Mikrokapseln aus den verschiedenen Harzen etwas unterschiedliche optimale pH-Werte und/oder Temperaturen gibt.

Als Kernmaterial kommen für die Mikrokapseln flüssige, feste oder gasförmige, in Wasser unlösliche bis im wesentlichen ungelöste Stoffe in Betracht, z. B. sind zu nennen: Flüssigkeiten wie Alkylnaphthaline, partiell hydrierte Terphenyle, aromatische Kohlenwasserstoffe wie Xylol, Toluol, Dodecylbenzol, aliphatische Kohlenwasserstoffe, wie Benzin und Mineralöl, Chlorparaffine, Fluorkohlenwasserstoffe, natürliche Öle wie Erdnußöl, Sojaöl, außerdem Klebstoffe, Aromastoffe, Parfumöle, Monomere wie Acryl- oder Methacrylsäureester, Styrol, Wirkstoffe wie Pflanzenschutzmittel, roter Phosphor, anorganische und organische Pigmente, z. B. Eisenoxidpigmente; außerdem Lösungen oder Suspensionen von Farbstoffen und vor allem von Farbbildnern und Pigmenten in Kohlenwasserstoffen wie Alkylnaphthalinen, partiell hydriertem Terphenyl, Dodecylbenzol und anderen hochsiedenden Flüssigkeiten.

Als anionische Schutzkolloide werden bevorzugt wasserlösliche Homo- oder Copolymerisate mit Sulfonsäuregruppen eingesetzt. Vorzugsweise wählt man Homo- oder Copolymerisate mit Sulfonsäuregruppen, die einen K-Wert nach Fikentscher von 100 bis 170 oder eine Viskosität von 200 bis 5000 mPas (gemessen in 20 gew.-%iger wäßriger Lösung bei 23°C mit einem Brookfield Gerät RVT, Spindel 3, bei 50 Upm) haben.

Bevorzugt sind Polymere mit einem K-Wert von 115 bis 150 oder deren Viskosität 400 bis 4000 mPas beträgt. Solche Schutzkolloide werden in der EP-A-0 026 914 und EP-A-0 562 344 beschrieben.

Vorteilhaft sind Polymerisate des Sulfoethyl(meth)acrylats, des Sulfopropyl(meth)acrylats, der Vinylsulfonsäure und der 2-Acrylamido-2-methylpropansulfonsäure allein als Homopolymerisate oder im Gemisch miteinander als Copolymerisate. Bevorzugt sind Polymere der 2-Acrylamido-2-methylpropansulfonsäure, da in deren Gegenwart Mikrokapseln mit sehr guten Eigenschaften gebildet werden. 2-Acrylamido-2-methylpropansulfonsäure hat ferner den Vorteil, daß diese sich leicht zu Polymeren mit gewünschten K-Werten polymerisieren läßt. Die Polymere liegen in Form der freien Säure oder vorzugsweise in Form der Alkalimetallsalze vor. Als Sulfonsäuregruppen tragende Polymere kommen außerdem Copolymere in Betracht, die aus den genannten Sulfogruppen tragenden Monomeren und C₁- bis C₃-Alkylacrylaten, Hydroxy-C₂- bis C₄-alkylacrylaten wie Methyl-, Äthyl-, n- oder i-Propylacrylat, Hydroxypropylacrylat und/oder N-Vinylpyrrolidon aufgebaut sind. Copolymerisate der 2-Acrylamido-2-methylpropansulfonsäure, Sulfoethyl- oder Sulfopropyl(meth)acrylat oder Vinylsulfonsäure werden in der EP-A-0 562 344 beschrieben, auf deren Lehre ausdrücklich Bezug genommen sei.

Besonders bevorzugte Schutzkolloide werden hiernach durch Copolymerisation von

| | |
|---|---|
| 40 - 75 Gew.-% | 2-Acrylamido-2-methylpropansulfonsäure, Sulfoethyl - oder Sulfopropyl(meth) -acrylat oder Vinylsulfonsäure, |
| 10 - 30 Gew.-% | Acrylsäure oder Methacrylsäure, |
| 10 - 50 Gew.-% | Methyl- oder Ethyl-acrylat oder -meth-acrylat oder N-Vinylpyrrolidon und |
| 0,5 - 5 Gew.-% | Styrol, C₄-C₁₈-Alkylacrylat oder -meth-acrylat |

erhalten.

Von den Copolymerisaten sind solche mit 2-Acrylamido-2-methylpropansulfonsäure als Sulfonsäuregruppen tragende Comonomeren bevorzugt.

Die Sulfonsäuregruppen tragenden Homo- und Copolymerisate werden nach bekannten Verfahren hergestellt.

Die Anwendungsmenge an dem wasserlöslichen, Sulfogruppen enthaltenden Polymeren liegt in der Regel zwischen 1 und 5,5, vorzugsweise zwischen 1,5 und 4,5 Gew.-%, bezogen auf die wäßrige Phase. Die optimale Menge an dem wasserlöslichen Sulfonsäuregruppen tragenden Polymeren wird zum einen vom Polymeren selbst, zum anderen von der Reaktionstemperatur, der gewünschten Mikrokapselgröße und dem Harz aus Melamin und Formaldehyd beeinflußt. Durch einfache Reihenversuche kann die optimal benötigte Menge an dem wasserlöslichen Polymeren leicht ermittelt werden.

Die Dispergierung des Kernmaterials erfolgt je nach der Größe der herzustellenden Kapseln in bekannter Weise. Für die Herstellung großer Kapseln reicht die Dispergierung unter Verwendung von wirksamen Rührern, insbesondere von Propeller- oder Impellerrührern aus. Kleine Kapseln, insbesondere wenn die Größe unterhalb von 50 µm liegen soll, erfordern Homogenisier- oder Dispergiermaschinen, wobei diese Geräte mit oder ohne zwangsdurchlaufvorrichtung versehen sein können.

Die Kapselgröße kann über die Tourenzahl des Dispergiergerätes/Homogenisiergerätes und/oder mit Hilfe der Konzentration des Sulfonsäuregruppen tragenden Polymeren bzw. über dessen Molekulargewicht, d. h. über die Viskosität der wäßrigen kontinuierlichen Phase innerhalb gewisser Grenzen gesteuert werden. Dabei nimmt mit Erhöhung der Tourenzahl bis zu einer Grenztourenzahl die Größe der dispergierten Teilchen ab.

Dabei ist es wichtig, daß die Dispergiergeräte zu Beginn der Kapselbildung angewendet werden. Bei kontinuierlich arbeitenden Geräten mit Zwangsdurchlauf ist es vorteilhaft, die Emulsion mehrmals durch das Scherfeld zu schicken.

Die für den Einzelfall optimalen Bedingungen, wie Temperatur, pH-Wert und Rührergeschwindigkeit können anhand von einigen Versuchen leicht ermittelt werden.

Nach dem erfindungsgemäßen Verfahren können Mikrokapseldispersionen mit einem Gehalt von 15 bis 60 Gew.-% an Mikrokapseln hergestellt werden. Die Mikrokapseln sind Einzelkapseln. Durch geeignete Bedingungen bei der Dispergierung können Kapseln mit Durchmesser im Bereich von 1 bis zu 50 µm und größer hergestellt werden. Besonders vorteilhaft ist die sehr enge Größenverteilung der Kapseln. Dies gilt auch für den Bereich von 1 bis etwa 8 µm, der für die Herstellung von druckempfindlichen Aufzeichnungssystemen und Reaktionsdurchschreibepapieren besonders geeignet ist. Daher sind die nach dem Verfahren gemäß der vorliegenden Erfindung erhaltenen Kapseln auch für die Herstellung von sogenannten Zweischichtenpapieren ("self-contained papers") geeignet, bei denen der Farbbildner in Kapseln und der zur Farbbildung benötigte Elektronenacceptor übereinander oder als Gemisch auf der Papieroberfläche aufgebracht sind.

Die Kapseldispersionen sind trotz der hohen Konzentration an Kapseln und des hohen Molekulargewichts der wasserlöslichen, Sulfonsäuregruppen enthaltenden Polymeren sehr niederviskos und deshalb auch durch Maschinensiebe von 25 bis 40 µm Maschenweite rasch filtrierbar. Bei der Filtration zeigt sich, daß die Ausbeute an Mikrokapseln bei dem erfindungsgemäßen Verfahren sehr hoch ist und in den meisten Fällen mehr als 98 % beträgt.

Diese neuen Mikrokapseldispersionen weisen einen äußerst geringen Formaldehydgehalt auf. Besonders erstaunlich ist jedoch die Tatsache, daß auch in den beschichteten Papieren der Formaldehydgehalt gering ist.

Man erklärt sich dies dadurch, daß vermutlich der freiwerdende Formaldehyd mit dem Harnstoff reagiert und in die Kapselwand mit eingebaut wird, da man Mikrokapseln mit anderen Eigenschaften, wie auch dickeren Kapselwänden bekommt. Dieses neue Verkapselungsverfahren ermöglicht es den Melamin-Formaldehyd-Harzgehalt bezogen auf die Kernmaterialmenge zu senken. Bevorzugt werden nach dem erfindungsgemäßen Verfahren erhältliche Mikrokapseln aus

| | |
|---|---|
| 7 bis 20 Gew.-% | Melamin-Formaldehydharz und/oder deren Methylether und |
| 2 bis 15 Gew.-% | Harnstoff, dessen Aminogruppe gegebenenfalls mit einer Ethylen- oder Propylenbrücke verbunden ist, |

jeweils bezogen auf das im wesentlichen wasserunlösliche, den Kapselkern bildendes Material.

Besonders bevorzugt werden Mikrokapseln aus 7 bis 20 Gew.-% Melamin-Formaldehyd-Harz und/oder deren Methylether und 4 bis 10 Gew.-%, insbesondere 5 bis 8 Gew.-% Harnstoff, dessen Aminogruppe gegebenenfalls mit einer Ethylen- oder Propylenbrücke verbunden ist, jeweils bezogen auf das Kapselkern bildende Material. Ganz besonders werden Mikrokapseln aus 7 bis 15 Gew.-%, insbesondere 7 bis 10 Gew.-%, Melamin-Formaldehyd-Harz und/oder deren Methylether und 4 bis 10 Gew.-%, insbesondere 5 bis 8 Gew.-% Harnstoff, dessen Aminogruppe gegebenenfalls mit einer Ethylen- oder Propylenbrücke verbunden ist, jeweils bezogen auf das Kapselkern bildende Material, bevorzugt.

Die nach dem erfindungsgemäßen Verfahren erhaltenen neuen Mikrokapseln zeichnen sich durch ihre gute Undurchlässigkeit und die gleichmäßige Größe aus.

Die nachfolgenden Beispiele sollen das erfindungsgemäße Verfahren erläutern:

### Verwendete Meßmethoden

### I) Messungen von Formaldehyd in Mikrokapseldispersionen nach DIN 16746

Nach diesem Meßverfahren wurde der in der fertigen (ausgehärteten) Dispersion gelöst vorliegende Formaldehyd bestimmt. Es beruht auf der Umsetzung von Natriumsulfitlösung mit Formaldehyd und der Rücktitration mit Jodlösung. Die Prozentangabe Formaldehydgehalt bezieht sich auf die Gesamtmenge Mikrokapseldispersion.

### IIa) Messungen der Formaldehydabgabe bei der Herstellung (Messungen mit Drägerröhrchen)

Die Luft über dem Reaktionsgefäß wurde mittels Dräger Prüfröhrchen 81 01 751 gem. Dräger Gebrauchsanweisung 234-8101751 auf Formaldehyd untersucht, Meßbereich der Röhrchen: 2 bis 40 ppm bei 5 Pumpenhüben.

### IIb) Messungen der Formaldehydabgabe bei der Herstellung (Messungen nach der Acetylacetonmethode)

Die Dispersionen wurden nach der Kapselbildung vom zylindrischen Rührgefäß mit Hochleistungsdispergierer in ein geschlossenes Gefäß mit Ankerrührer überführt. Dieses Gefäß wurde mit zwei mit Wasser gefüllten Waschflaschen verbunden, durch die ein langsamer Luftstrom geleitet wurde. Der während des Aufheiz- und Härtevorgangs freigesetzte Formaldehyd wurde durch den Luftstrom in die Waschflaschen überführt, wo er sich im Wasser löste. Die Bestimmung des Formaldehydgehaltes erfolgte photometrisch nach der Acetylacetonmethode.

### III)Messungen der Formaldehydabgabe während der Weiterverarbeitung nach der Reaktionsofenmethode

8,25 g einer 40 gew.-%igen (bzw. 6,6 g einer 50 gew.-%igen) Kapseldispersion wurden zusammen mit 9,75 g Wasser und 1,3 g einer 50 gew.%igen handelsüblichen Bindemitteldispersion auf Basis eines Copolymerisates aus Styrol und Butylacrylat (Acronal® S 320 D) auf ein Streichrohpapier aufgetragen. Nach Abdampfen des Wassers enthielt der Strich 84 % Kapseln und 16 % Bindemittel. Das frisch beschichtete Papier wurde 15 min im Ofen bei 105 °C mit einem konstantem Luftstrom getrocknet. Der Luftstrom wurde durch Waschflaschen geleitet, der entstandene Formaldehyd nach der Acetylacetonmethode photometrisch bestimmt. Die Prozentangabe gibt den Gehalt an Formaldehyd bezogen auf das Strichgewicht (Feststoff : Mikrokapseln + Bindemittel) an.

### IV) Messungen der Formaldehydkonzentration im Papier nach DIN EN 1541

Ein mit einer Streichfarbe, die durch gründliches Homogenisieren von 8,75 g Wasser, 8,25 g Mikrokapseldispersion, 1,30 g eines Celluloseschliffs als Abstandshalter (Arbocel® BSM 55) und 1,30 g einer 50 gew.-%igen handelsüblichen Bindemitteldispersion auf Basis eines Copolymerisates aus Styrol und Butylacrylat (Acronal® S 320 D) erhalten wurde, beschichtetes Papier (ca. 5 g/m2) wurde gemäß DIN EN 645 zerkleinert und ein Kaltwasserauszug gemacht. Der Formaldehyd im Filtrat wurde nach DIN 1541 mit Acetylaceton photometrisch bestimmt.

### V) Bestimmung der Dichtigkeit einer Mikrokapseldispersion (Test auf CF-Papier)

Die Mikrokapseldispersion wurde im Verhältnis 1:1 mit Wasser verdünnt und mit der Erichson-Lackhantel auf die CF-Schicht eines Standard-CF-Papiers aufgetragen. Das Papier wurde 30 min bei der Raumtemperatur getrocknet. Dann wurde mit einer Lupe auf punktförmige Verfärbungen hin untersucht, die von freiem Kernöl stammen und damit ein Gradmesser für die Dichtigkeit sind. Das Ergebnis wurde gemäß folgender Skala bewertet:
1 = gleichmäßig starke verfärbung
2 = gleichmäßige Verfärbung
3 = viele Farbpunkte
4 = einige Farbpunkte
5 = keine Farbpunkte

### VI) Bestimmung der Dichtigkeit einer Mikrokapseldispersion (Sprühtest)

Die Mikrokapseldispersion wurde im Verhältnis 1:1 mit Wasser verdünnt und mit der Erichson-Lackhantel (Spaltbreite 30 µm) auf die CF-Schicht eines Standard-CF-Papiers aufgetragen. Das Papier wurde 30 min bei Zimmertemperatur getrocknet. Anschließend wurde es mit Farbbildnerlösemittel aus der Sprühdose gleichmäßig, aber nicht zu stark, besprüht. Nach 2 h Lagerung ohne direktes Sonnenlicht wird die entstandene Verfärbung mit einem Reflexionsphotometer (ELREPHO®, Fa. Zeiss) (Normfarbwert Y) im Vergleich zu dem unbehandelten CF-Papier gemessen. Je kleiner der Zahlenwert für die Verfärbung, desto dichter sind die Kapseln.

### VII) Bestimmung der Intensität der Durchschrift eines mit einer Mikrokapselstreichfarbe beschichteten Papiers

Mit einer Streichfarbe, die durch gründliches Homogenisieren von 8,75 g Wasser, 8,25 g Mikrokapseldispersion, 1,30 g eines Celluloseschliffs als Abstandhalter (Arbocel BSM 55) und 1,30 g einer 50 gew.-%igen handelsüblichen Bindemitteldispersion auf Basis eines Copolymerisates aus Styrol und Butylacrylat (Acronal S 320 D) erhalten wurde, wurde Papier mittels einer Drahtrakel von 24 µm Spaltweite mit einem automatischen Auftragsgerät auf ein Streichrohpapier von 50 g/m² Gewicht derart beschichtet, daß die Beschichtung 30 min nach dem Aufstreichen und Trocknen an der Luft ein Beschichtungsgewicht von ca. 8 g/m² ergab (CB-Papier, coated back). Aus dem CB-Papier, einem Standard Phenol CF-Papier (coated front) sowie einem unbeschichteten dem Standard-Rohpapier entsprechenden Papier wurden gleich große Proben mit einer Mindestgröße von 70 x 60 mm ausgeschnitten.

Eine Probe des zu prüfenden CB-Papiers wurde mit der gestrichenen Seite nach unten auf eine mit der gestrichenen Seite nach oben liegenden Probe des Standard CF-Papiers gelegt. Darauf wurden zwei Proben des unbeschichteten Standard-Papiers gelegt. Dieser Sandwich wird in die elektrische Schreibmaschine so eingespannt, daß die Rückseite des Standard CF-Papiers auf der Schreibmaschinenwalze liegt. Die Anschlagstärke der Schreibmaschine wurde auf 3 gestellt und auf einer ca. 50 x 50 mm großen Fläche wurde der Buchstabe "w" geschrieben. Die so erhaltene Druckschrift wurde dann 30 min im Dunkeln aufbewahrt.

Anschließend wurde die Remission RY des w-Feldes des behandelten sowie eines unbehandelten CF-Papiers mit dem Reflexionsphotometer (ELREPHO, F. Zeiss) gemessen. Die Differenz wird als IG-Wert angegeben. Bei jeder Prüfung wurde auch ein Standard (100 % Melamin/Formaldehydharzmenge, kein Harnstoff) mitgeprüft. Angegeben werden in der Tabelle die IG-tnlert-Differenzen zum Standard (negative Werte: weniger intensiv in Durchschrift als Standard, positive Werte: intensivere Durchschrift als Standard).

### VIII) Bestimmung des Reibwertes eines mit einer Mikrokapselstreichfarbe beschichteten Papiers

a) Auf einer Unterlage aus synthetischem Leder wurde eine Probe des zu prüfenden CB-Papiers mit der gestrichenen Seite nach oben fixiert. Darauf wurde mit der gestrichenen Seite nach unten eine Probe des Standard-CF-Papiers gelegt. Nun wurde in der Nähe des Randes des CF-Papiers der Reibtester gestellt und mit vier Gewichten belastet. Die damit erzeugte spezifische Belastung betrug 2,1 N/cm2. Dann wurde das belastete CF-Papier mit dem Reibtester über die gesamte Länge (22 cm) des CB-Papiers langsam manuell gezogen. Dabei muß seine filzbeschichtete Fläche ganzflächig auf dem Untergrund liegen. Das so behandelte CF-Papier wurde 30 min im Dunkeln aufbewahrt.

Anschließend wurde die Remission RY des so behandelten sowie eines unbehandelten Papiers gemessen. Bei jeder Prüfung wurde auch ein Standard (100 % Melamin/Formaldehydharzmenge, kein Harnstoff) mitgeprüft. Angegeben werden in der Tabelle die IG-Wert-Differenzen zum Standard (negative Werte: weniger reibempfindlich als Standard, positive Werte: reibempfindlicher als Standard).

### IX) Feststoffgehalt

Der in den Beispielen angegebene Feststoffgehalt wurde durch Trocknung (1 Std. bei 105°C) bestimmt und setzt sich im wesentlichen aus den Mikrokapseln und dem wasserlöslichen Polymeren zusammen. Die Kapseldurchmesser wurden subjektiv unter dem Mikroskop, objektiv mit einem Malvern Sizer bestimmt. Angegeben werden die Kapseldurchmesser in µm als D(50) -Wert (50 % der Integralkurve).

Die Viskosität der Kapseldispersion wird als Auslaufzeit in Sekunden einer Dispersion aus dem DIN-Becher mit 4 mm-Düse angegeben (DIN 53211). Die Viskosität der 20 gew.-%igen Lösungen der wasserlöslichen stark saure Gruppen, z. B. Sulfonsäure enthaltenden Polymeren wurde bei 23°C mit einem Brookfield Gerät RVT mit Spindel 3 bei 50 Upm gemessen. Der K-Wert wurde nach Fikentscher (Cellulosechemie 13 (1932) 58 ff), 0,5 %ig in Wasser, bestimmt.

### Allgemeine Vorschrift zur Herstellung von Mikrokapseldispersionen

### A) Herstellung der Farbbildnerlösung

In einem Becherglas bzw. Vorlagegefäß wurden 385 g eines Lösemittelgemischs bestehend aus 80 Gew.-% Diisopropylnaphthalin (KMC Öl von RKS) und 20 Gew.-% einer Verdünnungskomponente (Shellsol D 100) vorgelegt und gerührt. Zu dieser Mischung wurden 15 g eines blauschreibenden Farbbildnergemischs (Pergascript® Blau I-2RN, Pergascript Blau S-RB und Pergascript Rot I-6B, Fa. CIBA) gegeben und die Mischung unter Rühren bis auf ca. 105 °C erhitzt. Die klare Lösung wurde noch weitere 45 min bei ca. 100 °C gehalten.

Für eine schwarzschreibende Farbbildnerlösung wurde gemäß obiger Vorschrift mit den folgenden Einsatzstoffen eine Lösung hergestellt: 380 g eines Lösemittelgemisches aus 70 Gew-% Diisopropylnaphthalin (KMC Öl) und 30 Gew.-% einer Verdünnungskomponente (Shellsol D 100) und 20 g eines schwarzdurchschreibenden Farbbildnergemischs (z.B. Pergascript Blau I-2RN, Pergascript Grün I-2GN, Pergascript Schwarz I-R und Pergascript Rot I-6B).

### Melamin-Formaldehyd-Harz

Es wurde bei allen Versuchen eine 70 gew.-%ige wäßrige Lösung eines teilveretherten methylolierten Melamin-Formaldehydharzes als Ausgangsharz verwendet. Dieses Harz hat ein Verhältnis von 1 mol Melamin zu 5,7 mol Formaldehyd und einen Methylierungsgrad von 3,7.

### B1) Herstellung einer 40 gew.-%igen Dispersion

In ein zylindrisch geformtes 2 1-Rührgefäß mit eingebautem Hochleistungsdispergieraggregat wurden unter langsamem Rühren 580 g Wasser, 80 g einer 20 gew.-%igen wäßrigen Lösung eines Polymers aus 2-Acrylamido-2-methylpropansulfonat (Na-Salz) (Viskosität: 1000 mPas, K-Wert: 155), 86 g einer 70 gew.-%igen wäßrigen Lösung des Melamin-Formaldehyd-Harzes und die jeweilige Harnstoffmenge gegeben. Dabei wurde je nach Harnstoffmenge die Dispersion durch Verdünnen auf 40 gew.-%igen Feststoffgehalt eingestellt.

Anschließend wurde die Drehzahl des Dissolvers so stark erhöht, daß eine gute Durchmischung erzielt wurde. Immer noch unter Durchmischung wurde nun 400 g Farbbildnerlösung langsam zugegeben. Es wurde auf 28 - 30°C temperiert und die Dissolverdrehzahl auf 6000 Upm gestellt. Anschließend wurden 16 g 10 gew.-%ige Ameisensäure zugegeben, wobei sich ein pH-Wert von 3,6 bis 3,8 einstellte. Nach ungefähr 35 - 45 min bildeten sich Kapseln. Sobald die gewünschte Kapselgröße erreicht war, wurde die Umdrehungszahl des Dissolvers auf 2000 Upm gesenkt und die Kapseldipsersion eine weitere Stunde bei 28 - 30°C und 2000 Upm gerührt.

Zur Härtung wurde die Kapseldispersion auf 75°C aufgeheizt und bei Erreichen der Temperatur zwei Stunden bei 75°C gehalten. Nach Beendigung der Härtezeit wurde der Ansatz auf etwa 40°C abgekühlt und durch Zugabe von 6 g NaOH (50 gew.-%ig) oder 14,2 g Diethanolamin (80 %ig) neutral gestellt.

### B2) Herstellung einer 50 gew.-%igen Dispersion

In ein zylindrisch geformtes 2 1-Rührgefäß mit eingebautem Hochleistungsdispergieraggregat wurden unter langsamem Rühren 400 g Wasser, 100 g einer 20 gew.-%igen wäßrigen Lösung eines Copolymers aus Acrylamidomethylpropansulfonat, Methylacrylat, Acrylsäure und Styrol, 110 g einer 70 gew.-%igen wäßrigen Lösung des Melamin-Formaldehyd-Harzes und die jeweilige Harnstoffmenge gegeben. Dabei wurde je nach Harnstoffmenge die Dispersion durch Verdünnen auf 50 gew.-%igen Feststoffgehalt eingestellt.

Die Drehzahl des Dissolvers wurde so stark erhöht, daß eine gute Durchmischung erzielt wurde. Immer noch unter Durchmischung wurde nun 500 g Farbbildnerlösung langsam zugegeben. Es wurde auf 28 - 30°C temperiert und die Dissolverdrehzahl auf 6000 Upm gestellt. Anschließend wurden 36 g 10 gew.-%ige Ameisensäure zugegeben, wobei sich ein pH-Wert von 3,6 bis 3,8 einstellte. Nach ungefähr 35 - 45 Minuten bildeten sich Kapseln. Sobald die gewünschte Kapselgröße erreicht war, wurde die Umdrehungszahl des Dissolvers auf 2000 Upm gesenkt und die Kapseldipsersion eine weitere Stunde bei 28 - 30°C und 2000 Upm gerührt.

Zur Härtung wurde die Kapseldispersion auf 75°C aufgeheizt und bei Erreichen der Temperatur zwei Stunden bei 75°C gehalten. Nach Beendigung der Härtezeit wurde der Ansatz auf etwa 40°C abgekühlt und durch Zugabe von 6,5 g NaOH (50 gew.-%ig) oder 17,2 g Diethanolamin (80 gew.-%ig) neutral gestellt.

### B3) Herstellung einer 50 gew.-%igen Dispersion

Es wurde wie unter B2 beschrieben verfahren, jedoch wurde die Mikrokapselbildung bei 45 °C durchgeführt. Dabei wurden abweichend von dem oben beschriebenen Prozeß 500 g der heißen Farbbildnerlösung langsam zugegeben, wobei sich eine Mischungstemperatur von ca. 40 - 45°C einstellte. Bei einer Verkapselungstemperatur von 44 - 46°C und einer Dissolverdrehzahl von 6000 Upm wurden 28 g 10 gew.-%ige Ameisensäure zugegeben. Anschließend wurde die Drehzahl des Dissolvers auf 3500 Upm zurückgenommen. Nach 30 Minuten war der Verkapselungsvorgang abgeschlossen.

Danach wurde auf 75°C aufgeheizt und bei Erreichen der Härtetemperatur die Drehzahl auf 2000 Upm reduziert. Die Temperatur wurde zwei Stunden bei 75°C gehalten. Nach Beendigung der Härtezeit wurde der Ansatz auf etwa 40°C abgekühlt und durch Zugabe von 6,5 g Natronlauge (50 gew.-%ig) oder 17,2 g Diethanolamin (80 gew.-%ig) neutral gestellt.

Es wurden sowohl 40 gew.-%ige als auch 50 gew.-%ige Kapseldispersionen nach verschiedenen Verfahren hergestellt. Es wurden ferner sowohl blau- als auch schwarzschreibende Kapseln geprüft. Der Kapselinhalt hat keinen Einfluß auf die Formaldehydgehalte. Das vorgeschlagene Verfahren zur Reduzierung des Formaldehyds kann auch mit allen vorgestellten Verfahrensvarianten durchgeführt werden.

### Beispiele 1 - 10 (erfindungsgemäßes Verfahren)

Für die Beispiele 1 - 10 wurden 50 gew.-%ige Kapseldispersionen mit blauem Farbbildner gemäß den Vorschriften B2 und B3 hergestellt. Dabei wurde die Melamin-Formaldehyd-Harzmenge x variiert; 110 g einer 70 gew.-%igen Harzlösung wurden gleich 100% gesetzt und bis auf 60% verringert. Der Harnstoffzusatz wurde von 1 bis 4 Gew.-% bezogen auf die Gesamtmenge Dispersion (12 bis 48 g Harnstoff) variiert.

Alle Dispersionen wurden anschließend mit Natronlauge neutralisiert (pH bei ca. 9 bis 10).

### Beispiel V1

Analog zu den Beispielen 1 bis 10 wurde eine 50 gew.-%ige Kapseldispersion hergestellt, jedoch ohne Harnstoffzusatz.

Die Verfahrensparameter sowie die anwendungstechnischen Ergebnisse sind der folgenden Tabelle 1 zu entnehmen:

**Tabelle 1**

| Bsp. | x [%] | y [%] | T [°C] | I) [%] | III) [%] | VI) IG | D(50) [µm] | VII) IG | VIII) IG |
|---|---|---|---|---|---|---|---|---|---|
| 1 | 100 | 3,0 | 45 | 0,24 | | 1,8 | 5,6 | -3,9 | -6,6 |
| 2 | 90 | 1,0 | 45 | 0,79 | | 1,0 | 4,4 | -2,6 | -3,4 |
| 3 | 80 | 2,0 | 45 | 0,21 | 0,49 | 1,8 | 5,1 | -2,2 | -2,2 |
| 4 | 70 | 4,0 | 30 | 0,01 | 0,13 | 1,3 | 4,9 | -2,3 | -4,0 |
| 5 | 70 | 3,0 | 30 | 0,04 | 0,06 | 2,1 | 6,3 | 1,3 | 0,0 |
| 6 | 70 | 3,0 | 50 | 0,03 | | 1,1 | 5,6 | -1,5 | -3,4 |
| 7 | 70 | 2,6 | 30 | 0,08 | 0,27 | 1,5 | 6,1 | -0,4 | -0,6 |
| 8 | 60 | 3,0 | 30 | 0,01 | 0,04 | 1,5 | 5,6 | 1,8 | -2,6 |
| 9 | 65 | 2,6 | 45 | 0,07 | | 1,9 | 6,3 | 0,1 | -1,1 |
| 10^{a}) | 60 | 3,0 | 45 | 0,02 | 0,06 | 1,8 | 4,4 | -0,6 | -2,7 |
| 11 | 55 | 2,3 | 45 | | | 1,2 | 7,4 | 2,7 | 1,0 |
| 12 | 50 | 2,0 | 45 | | | 3,2 | 7,2 | 4,9 | 2,5 |
| V1 | 70 | 0 | 45 | 0,98 | | 3,4 | 5,5 | 4,5 | 9,9 |

| | | | | | | | | | |
|---|---|---|---|---|---|---|---|---|---|
| a) es wurden nur 80 g der 20 Gew.-%igen Schutzkolloiddispersion eingesetzt | | | | | | | | | |
| x = x % von 110 g Melamin-Formaldehyd-Harzlösung (70 gew.-%ig) | | | | | | | | | |
| y = y Gew.-% Harnstoff bez. auf Gesamtdispersion | | | | | | | | | |
| I) Formaldehydgehalt der Dispersion nach DIN 16746 | | | | | | | | | |
| III) Formaldehydemmision bei 105°C | | | | | | | | | |
| VI) Sprühtest (Dichtigkeit der Mikrokapseln) | | | | | | | | | |
| VII) Intensität der Durchschrift | | | | | | | | | |
| VIII) Reibwert | | | | | | | | | |

Alle Dispersionen wurden im Dichtigkeitstest auf CF-Papier mit der Note 5 bewertet. Die negativen Werte für Intensität VII) und Reibwert VIII) der Kapseln von Beispiel 1 zeigen, daß die Kapselwand dicker ist als nach der Standardverkapselung (100 % MelaminFormaldehydharzmenge, kein Harnstoff), worauf die höhere Festigkeit/Dichtheit beruht. Durch eine verringerte Harzmenge wurden neue Mikrokapseln mit verbesserten Eigenschaften erhalten. Nach dem erfindungsgemäßen Verfahren ist es möglich, die Harzmenge bis zu 50 % der Standardmenge zu senken und so zu besseren formaldehydärmeren Dispersionen zu kommen, bei gleicher Dichtheit. Die Werte zeigen, daß eine Erniedrigung der Harzmenge auf 55 - 60 Gew.-% in etwa der Wandstärke der Standardkapseln entspricht. Ohne erfindungsgemäßen Harnstoffzusatz werden mit verringerter Melamin-Formaldehyd-Harzmenge undichte und reibempfindlichere Kapseln erhalten.

### Beispiele 13, 14, V2 und V3

Es wurden 40 gew.-%ige Kapseldispersionen mit blauem Farbbildner gemäß Verfahrensvorschrift B1 hergestellt, wobei die Harzmenge verringert wurde (56 g einer 70 gew.-%igen Menge = 65% der Standardmenge). Der Harnstoffzusatz wurde bezogen auf die Gesamtmenge Dispersion variiert. Die Dispersionen wurden anschließend mit Natronlauge neutralisiert (pH bei ca. 9 bis 10).

Die Verfahrensparameter sowie die anwendungstechnischen Ergebnisse sind der folgenden Tabelle 2 zu entnehmen:

**Tabelle 2**

| Bsp. | x [%] | y [%] | T [°C] | I) [%] | IV) [ppm] | VI) IG | D(50) [µm] | VII) IG | VIII) IG |
|---|---|---|---|---|---|---|---|---|---|
| 13 | 65 | 3,0 | 30 | 0,02 | | 1,6 | 5,7 | 1,7 | -1,3 |
| 14 | 65 | 2,6 | 30 | 0,06 | 90 | 1,5 | 4,5 | 0,7 | 0,7 |
| V2 | 65 | 0 | 45 | 0,87 | 270 | 1,8 | 5,2 | 5,0 | 5,3 |
| V3 | 65 | 0 | 45 | 0,87 | | 1,5 | 5,4 | 4,6 | 10,7 |

| | | | | | | | | | |
|---|---|---|---|---|---|---|---|---|---|
| x = x % von 86 g Melamin-Formaldehydharzlösung (70 gew.-%ig) | | | | | | | | | |
| y = y Gew.-% Harnstoff bez. auf Gesamtdispersion | | | | | | | | | |
| I) Formaldehyd nach DIN 16746 | | | | | | | | | |
| IV) Formaldehydgehalt von beschichtetem Papier nach DIN EN 1541 | | | | | | | | | |
| VI) Sprühtest (Dichtigkeit der Mikrokapseln) | | | | | | | | | |
| VII) Intensität der Durchschrift | | | | | | | | | |
| VIII) Reibwert | | | | | | | | | |

### Beispiele 15 - 19 und V4 - V9

Es wurden die Formaldehydwerte von Mikrokapseln mit vergleichbarer Wanddicke gegenübergestellt. Die Mikrokapseln der Beispiele 15 - 19, V4 und V5 wurden gemäß den allgemeinen Herstellverfahren jedoch mit reduzierter Harzmenge hergestellt (bezogen auf 100 % Harzmenge in den allgemeinen Herstellvorschriften). Für die Vergleichsversuche wurden Mikrokapseln mit 65 und 100 %iger Harzmenge hergestellt.

Alle Dispersionen wurden anschließend mit NaOH neutralisiert (pH 9 - 10).

Der Harnstoff wurde zu unterschiedlichen Zeitpunkten zugesetzt:
- Bsp.3: Harnstoffzugabe nach der Kapselbildung bei 45°C vor dem Härten
- Bsp.v4: Zugabe im Sauren nach der Härtung bei 30°C
- Bsp.v5: keine Harnstoffzugabe
- Bsp.v6: Zugabe im Sauren bei 75°C direkt vor dem Abkühlen
- Bsp.V7: Harnstoffzugabe nach Härtung bei pH 9-11
- Bsp.V8: Harnstoffzugabe nach der Härtung bei pH 9-11
- Bsp.V9: Ethylenharnstoffzugabe nach der Härtung bei pH 9-11

**Tabelle 3**

| Bsp. | H | x [%] | y [%] | z [%] | T °C | I) [%] | IV) [ppm] | VI) IG | D(50) [µm] | VII) IG | VIII) IG |
|---|---|---|---|---|---|---|---|---|---|---|---|
| 15 | B3 | 65 | 2,6 | 0 | 45 | 0,06 | 70 | 2,0 | 5,2 | 0,5 | -3,6 |
| 16 | B3 | 65 | 3,0 | 0 | 45 | 0,03 | | 2,5 | 5,9 | 0,1 | -2,3 |
| 17 | B3 | 65 | 2,6 | 0 | 45 | 0,07 | 50 | 1,9 | 6,3 | 0,1 | 0,3 |
| 18 | B2 | 65 | 2,6 | 0 | 30 | 0,07 | 80 | 2,7 | 6,7 | 1,7 | 2,8 |
| 19 | B2 | 60 | 2,6 | 0 | 30 | 0,03 | 50 | 1,4 | 4,9 | 0,8 | -1,2 |
| V4 | B3 | 65 | 0 | 2,6 | 45 | 0,09 | 250 | 4,5 | 5,3 | 3,3 | 1,7 |
| V5 | B3 | 65 | 0 | 0 | 45 | 0,87 | 270 | 1,8 | 5,2 | 5,0 | 5,3 |
| V6 | B1 | 100 | 0 | 4,0 | 30 | 0,04 | 310 | 3,9 | 5,9 | 0,1 | 6,1 |
| V7 | B1 | 100 | 0 | 4,0 | 30 | 0,07 | 340 | | | | |
| V8 | B3 | 100 | 0 | 3,0 | 45 | 0,13 | 680 | | 5,7 | 1,3 | -2,7 |
| V9b) | B3 | 100 | 0 | 3,0 | 45 | 0,07 | 260 | | 5,7 | 1,4 | -2,2 |

| | | | | | | | | | | | |
|---|---|---|---|---|---|---|---|---|---|---|---|
| b) anstelle Harnstoff wurde Ethylenharnstoff verwendet | | | | | | | | | | | |
| H = Herstellverfahren | | | | | | | | | | | |
| x = x % von 110 g oder 86 g (V5, V6) Melamin-Formaldehyd-Harzlösung (70 gew.-%ige Dispersion) | | | | | | | | | | | |
| y = y Gew.-% Harnstoff bez. auf Gesamtdispersion | | | | | | | | | | | |
| z = Harnstoff, der während oder nach der Härtung zugesetzt wurde | | | | | | | | | | | |
| I) Formaldehydgehalt der Mikrokapseldispersion nach DIN 16746 | | | | | | | | | | | |
| IV)Formaldehydgehalt von beschichtetem Papier nach DIN EN 1541 | | | | | | | | | | | |
| VI) Sprühtest (Dichtigkeit der Mikrokapseln) | | | | | | | | | | | |
| VII) Intensität der Durchschrift | | | | | | | | | | | |
| VIII) Reibwert | | | | | | | | | | | |

Die Ergebnisse belegen, daß nur die erfindungsgemäße Harnstoffzugabe zu neuen Kapseln führt, die sowohl einen verringerten Formaldehydwert in der Mikrokapseldispersion haben, wie auch im Papier selbst.

### Beispiele V10 - V12

Gemäß den Herstellvorschriften B1, B2 und B3 wurden 40 und 50 gew.-%ige Kapseldispersionen hergestellt, bei denen kein Harnstoff vor dem Härtungsschritt zugesetzt wurde. Die Dispersionen wurden anschließend mit Natronlauge neutralisiert (pH 10).

**Tabelle 4**

| Bsp. | x [%] | FG [%] | T [°C] | I) [%] | IV) [ppm] | VI) IG | D(50) [µm] | VII) IG | VIII) IG |
|---|---|---|---|---|---|---|---|---|---|
| V10 | 100 | 39,9 | 30 | 1,06 | 160 | 3,6 | | | |
| V11 | 100 | 50,0 | 45 | 1,24 | | | | | |
| V12a) | 100 | 43,3 | 30 | 1,12 | 190 | 3,9 | 5,9 | -1,4 | -2,2 |

| | | | | | | | | | |
|---|---|---|---|---|---|---|---|---|---|
| a) = 40 gew.-%ige Mikrokapseldispersion | | | | | | | | | |
| x = x % von 110 g Melamin-Formaldehyd-Harzlösung (70 gew.-%ig) | | | | | | | | | |
| FG = Feststoffgehalt der Dispersion | | | | | | | | | |
| I) Formaldehyd nach DIN 16746 | | | | | | | | | |
| IV)Formaldehydgehalt von beschichtetem Papier nach DIN EN 1541 | | | | | | | | | |
| VI) Sprühtest (Dichtigkeit der Mikrokapseln) | | | | | | | | | |
| VII) Intensität der Durchschrift | | | | | | | | | |
| VIII) Reibwert | | | | | | | | | |

### Beispiele 20, 21 (erfindungsgemäß) und V13, V14 (Vergleich) Formaldehydemission während der Härtung

Gemäß Herstellvorschrift B3 wurden 50 gew.-%ige Kapseldispersionen hergestellt. Bei den Beispielen 20 und 21 wurde jeweils x g Harnstoff vor dem Dispergierschritt zugesetzt und die Vorkondensatmenge reduziert. Bei den Beispielen V13 und V14 wurde kein Harnstoff zugesetzt.
a) Mit Dräger Prüfröhrchen wurde der Gasraum über dem Reaktionsgefäß untersucht. Während der Aufheizphase auf die Härtungstemperatur wurde die Formaldehydkonzentration des Gasraum bestimmt. Die verwendeten Prüfröhrchen sind auf 5 Hübe geeicht und geben erst dann die tatsächliche Konzentration an. Da aber bei 40 ppm die Meßgrenze der Röhrchen erreicht war, wurde mit weniger Hüben gearbeitet, um noch eine Vergleichbarkeit zu erreichen.

**Tabelle 5**

| Bsp. | x | y | 60°C | 64°C | 66°C | 70°C |
|---|---|---|---|---|---|---|
| | | | 3 Hübe | 2 Hübe | 1 Hub | 1 Hub |
| | [%] | [%] | [ppm] | [ppm] | [ppm] | [ppm] |
| 20 | 65 | 2,6 | 15 | 10 | 5 | 20 |
| V13 | 100 | 0 | >40 | >40 | 40 | >40 |

| | | | | | | |
|---|---|---|---|---|---|---|
| x = x % von 86 g Melamin-Formaldehyd-Harzlösung (70 gew.-%ig) | | | | | | |
| y = y Gew.-% Harnstoff bez. auf Gesamtdispersion | | | | | | |

b) Mit der in Vorschrift IIb) beschriebenen Acetylacetonmethode wurde die Gesamtmenge des emittierten Formaldehyds während des Aufheizens und Härtens gemessen.

**Tabelle 6**

| Bsp. | x | y | II) |
|---|---|---|---|
| | [%] | [%] | [%] |
| 21 | 65 | 2,6 | <0,001% / <0,0001 % |
| V14 | 100 | 0 | 0,69 % / 0,07 % |

| | | | |
|---|---|---|---|
| x = x % von 86 g Melamin-Formaldehyd-Harzlösung (70 gew.-%ig) | | | |
| y = y Gew.-% Harnstoff bez. auf Gesamtdispersion | | | |
| II) Messung nach der Acetylacetonmethode(1. Waschf1./2. Waschflasche), Formaldehyd in % bez. auf die Gesamtdispersion, in 250 ml | | | |

### Nachbehandlung der Mikrokapseldispersion

### Beispiele 22 - 24

Es wurden gemäß der allgemeinen Herstellvorschrift B3 Mikrokapseldispersionen hergestellt, die nach der Härtung noch zusätzlich mit 3 Gew.-% Harnstoff oder Ethylenharnstoff behandelt und mit Natronlauge basisch auf pH 10 gestellt wurden.

### Beispiele V15-V19

Es wurden gemäß der allgemeinen Herstellvorschrift B1 Mikrokapseldispersionen hergestellt, denen kein Harnstoff zugesetzt wurde. Stattdessen wurde nach der Härtung mit Ammoniak und/oder Diethanolamin oder Natronlauge neutral bis basisch gestellt.

**Tabelle 7**

| Bsp. | H | x [%] | y [%] | Amin | pH | I) [%] | IV) [ppm] | D(50) [µm] | VII) IG | VIII) IG |
|---|---|---|---|---|---|---|---|---|---|---|
| 22 | B3 | 65 | 2,6 | - - - | | 0,08 | 70 | 5,7 | 0,0 | -4,7 |
| 23 | B3 | 65 | 2,6 | Harnstoff | | 0,02 | 120 | 5,7 | 0,3 | -4,2 |
| 24 | B3 | 65 | 2,6 | Ethylenharnstoff | | 0,01 | 60 | 5,7 | 0,2 | -4,3 |
| V15 | B1 | 100 | 0 | NH₃ | 8,2 | 0,08 | 250 | | | |
| V16 | B1 | 100 | 0 | NH₃ | 9,1 | 0,01 | 240 | | | |
| V17 | B1 | 100 | 0 | NH₃ | 10,0 | 0,01 | 250 | | | |
| V18 | B1 | 100 | 0 | Diethanolmin/NH₃¹⁾ | 9,4 | 0,08 | 320 | | | |
| V19 | B1 | 100 | 0 | NaOH | 12,0 | 1,06 | 160 | | | |

| | | | | | | | | | | |
|---|---|---|---|---|---|---|---|---|---|---|
| H = Herstellvorschrift | | | | | | | | | | |
| 1) 17,2 g Diethylanolamin (80 gew.-%ig) und 24 g Ammoniaklösung (25 gew.-%ig) | | | | | | | | | | |
| x = x % von 110 g Melamin-Formaldehyd-Harzlösung (70 gew.-%ig) | | | | | | | | | | |
| y = y Gew.-% Harnstoff bez. auf Gesamtdispersion | | | | | | | | | | |
| I) Formaldehydgehalt der Mikrokapseldispersion nach DIN 16746 | | | | | | | | | | |
| IV) Formaldehydgehalt von beschichtetem Papier nach DIN EN 1541 | | | | | | | | | | |
| VII) Intensität der Durchschrift | | | | | | | | | | |
| VIII) Reibwert | | | | | | | | | | |

### Beispiel V20

Es wurde gemäß EP-A-0383558, Beispiel 33, Seite 25, Zeile 54 ff. verfahren: Als Schutzkolloid wurden 132,5 g einer 20 gew.-%igen wäßrigen Lösung eines Copolymers aus Acrylamidomethylpropansulfonat, Methylacrylat, vinylisch ungesättigter Säure (Acrylsäure) und Styrol verwendet. Als Kapselkern wurden 132,5 g einer 5 gew.-%igen Farbbildnerlösung gewählt. Nach Zugabe von 77,1 g Melamin-Formaldehyd-Harzlösung hatte die Mischung pH 5,5. Nach 15 min wurde die Mischung sehr zähflüssig, so daß 150 ml Wasser zugegeben wurden. Nach 20 min erhielt man Kapseln von 5-10 µm Durchmesser. Vor der Zugabe der Harnstofflösung wurde der freie Formaldehyd in der Dispersion bestimmt: 0,2 %. Nach der Zugabe der Harnstofflösung wurde pH: 3,5 eingestellt und 1 h bei 60 °C gehärtet. Danach wurde abgekühlt und der pH auf 6,5 gestellt. Der Formaldehyd betrug jetzt: 0,03 %. Die Kapseln waren nach der Härtung nicht stabil, die DC-Platte verfärbte sich sofort.

### Beispiel V21

Der Versuch wurde mit geändertem Mengenverhältnis analog Beispiel V20 wiederholt:

| | |
|---|---|
| Melamin-Formaldehyd-Harzlösung: | 150 g |
| Schutzkolloid: | 40 g |
| Kernöl: | 200 g |
| Wasser: | 200 g |
| Harnstofflösung 40 gew.-%ig: | 33 g |

Auch die nach dieser Vorgehensweise erhaltenen Mikrokapseln waren nicht stabil, die DC-Platte verfärbte sich sofort. Der Formaldehydgehalt betrug vor der Harnstoffzugabe: 0,2 %, nach der Fertigstellung: 0,01 %, also sehr ähnlich den Werten aus dem vorangegangenen Versuch.

## Patentansprüche

1. Verfahren zur Herstellung von Mikrokapseln durch Kondensation von Melamin-Formaldehyd-Harzen und/oder deren Methylethern in Wasser, in dem das im wesentlichen wasserunlösliche, den Kapselkern bildende Material dispergiert ist, in Gegenwart eines anionischen Schutzkolloids bei pH-Werten von 3 bis 6,5 durch Bildung der Mikrokapseln bei Temperaturen von 20 bis 50°C und anschließender Härtung der Kapselwand bei >50 - 100°C, **dadurch gekennzeichnet, daß** man vor der Härtung 10 - 200 Gew.-% Harnstoff, dessen Aminogruppen gegebenenfalls mit einer Ethylen- oder Propylenbrücke verbunden sind, bezogen auf das Melamin-Formaldehyd-Harz zusetzt.

2. Verfahren nach Anspruch 1, **dadurch gekennzeichnet, daß** man vor der Härtung 50 - 150 Gew.-%, bezogen auf die Harzmenge, Harnstoff, dessen Aminogruppen gegebenenfalls mit einer Ethylen- oder Propylenbrücke verbunden sind, zusetzt.

3. Verfahren nach Anspruch 1 oder 2, **dadurch gekennzeichnet, daß** das anionische Schutzkolloid ein Sulfonsäuregruppen tragendes Homo- oder Copolymerisat ist.

4. Verfahren nach den Ansprüchen 1 bis 3, **dadurch gekennzeichnet, daß** das anionische Schutzkolloid ein Homo- oder Copolymerisat der 2-Acrylamido-2-methylpropansulfonsäure, Sulfoethyl- oder Sulfopropyl(meth)acrylat oder Vinylsulfonsäure ist.

5. Verfahren nach den Ansprüchen 1 bis 4, **dadurch gekennzeichnet, daß** man als Melamin-Formaldehyd-Harz Umsetzungsprodukte von Melamin mit Formaldehyd im Molverhältnis 1:3 bis 1:6 verwendet, wobei die Umsetzungsprodukte gegebenenfalls mit Methanol verethert sind.

6. Verfahren nach den Ansprüchen 1 bis 5, **dadurch gekennzeichnet, daß** man die Herstellung der Mikrokapseln bei pH-Werten von 3 bis 5 vornimmt.

7. Verfahren nach den Ansprüchen 1 bis 6, **dadurch gekennzeichnet, daß** man
| | |
|---|---|
| 7 bis 20 Gew.-% | Melamin-Formaldehyd-Harz und/oder deren Methylether und |
| 2 bis 15 Gew.-% | Harnstoff, dessen Aminogruppe gegebenenfalls mit einer Ethylen- oder Propylenbrücke verbunden ist, |
jeweils bezogen auf das den Kapselkern bildende Material, einsetzt.

## Claims

1. A process for the preparation of microcapsules by condensing melamine-formaldehyde resins and/or the methyl ethers thereof in a water dispersion of a substantially water-insoluble material forming the core of the capsules, in the presence of an anionic protective colloid at a pH of from 3 to 6.5 by forming the microcapsules at temperatures of from 20 to 50°C and subsequently curing the shell of the capsules at from >50 to 100°C, wherein from 10 to 200 wt % of urea, whose amino groups are if appropriate linked to an ethylene or propylene bridge, are added prior to curing, based on the melamine-formaldehyde resin.

2. A process as defined in claim 1, wherein from 50 to 150 wt %, based on the amount of resin, of urea, whose amino groups are optionally linked to an ethylene or propylene bridge, are added prior to curing.

3. A process as defined in claim 1 or 2, wherein the anionic protective colloid is a sulfo-containing homopolymer or copolymer.

4. A process as defined in claims 1 to 3, wherein the anionic protective colloid is a homopolymer or copolymer of 2-acrylamido-2-methylpropanesulfonic acid, sulfoethyl or sulfopropyl (meth)acrylate or vinylsulfonic acid.

5. A process as defined in claims 1 to 4, wherein the melamine-formaldehyde resin used comprises reaction products of melamine with formaldehyde in a molar ratio of from 1:3 to 1:6, the reaction products being optionally etherified with methanol.

6. A process as defined in claims 1 to 5, wherein the preparation of the microcapsules is carried out at a pH of from 3 to 5.

7. A process as defined in claims 1 to 6, wherein use is made of
| | |
|---|---|
| 7 to 20 wt % | of melamine-formaldehyde resin and/or the methyl ethers thereof and |
| 2 to 15 wt % | of urea whose amino groups are optionally linked to an ethylene or propylene bridge, |
based, in each case, on the material forming the core of the capsules.

## Revendications

1. Procédé de préparation de microcapsules par condensation de résines de mélamine-formaldéhyde et/ou de leurs éthers méthyliques dans de l'eau, dans lequel la matière formant les capsules, sensiblement insoluble dans l'eau, est dispersée en présence d'un colloïde de protection anionique, à des valeurs de pH de 3 à 6,5, avec formation des microcapsules à des températures de 20 à 50°C et durcissement ultérieur de la paroi de capsule à >50-100°C, **caractérisé en ce que**, avant le durcissement, on ajoute, par rapport à la résine de mélamine-formaldéhyde, 10 à 200 % en poids d'urée dont les groupes amino sont éventuellement reliés à un pont éthylène ou propylène.

2. Procédé suivant la revendication 1, **caractérisé en ce que**, avant le durcissement, on ajoute, par rapport à la quantité de résine, 50 à 150 % en poids d'urée dont les groupes amino sont éventuellement reliés à un pont éthylène ou propylène.

3. Procédé suivant la revendication 1 ou 2, **caractérisé en ce que** le colloïde de protection anionique est un homopolymère ou copolymère portant des groupes acide sulfonique.

4. Procédé suivant les revendications 1 à 3, **caractérisé en ce que** le colloïde de protection anionique est un homopolymère ou copolymère de l'acide 2-acrylamido-2-méthylpropanesulfonique, de (méth)acrylate de sulfoéthyle ou de sulfopropyle ou d'acide vinylsulfonique.

5. Procédé suivant les revendications 1 à 4, **caractérisé en ce que**, comme résine de mélamine-formaldéhyde, on utilise des produits réactionnels de mélamine avec du formaldéhyde dans un rapport molaire de 1/3 à 1/6, les produits de la réaction étant éventuellement éthérifiés avec du méthanol.

6. Procédé suivant les revendications 1 à 5, **caractérisé en ce qu'**on effectue la préparation des microcapsules à des valeurs de pH de 3 à 5.

7. Procédé suivant les revendications 1 à 6, **caractérisé en ce qu'**on met en oeuvre
| | |
|---|---|
| 7 à 20 % en poids | de résine de mélamineformaldéhyde et/ou de ses éthers méthyliques, et |
| 2 à 15 % en poids | d'urée dont le groupe amino est relié éventuellement à un pont éthylène ou propylène, |
chaque fois par rapport à la matière formant le noyau des capsules.
